# EUROPEAN PATENT APPLICATION

(11) **EP 1 632 729 A1**
(43) Date of publication of application: **08.03.2006**
(21) Application number: 04745273.5
(22) Date of filing: 21.05.2004
(51) Int. Cl.: F24F 11/02

(54) **AIR-CONDITIONER**

(30) Priority: 03.06.2003 JP 2003158215
(71) Applicant: Toshiba Carrier Corporation, Tokyo 105-8001 (JP)
(72) Inventor: UESUGI, Michika, Fuji-shi, Shizuoka 4160945 (JP); KOBAYASHI, Takehiro, Fuji-shi, Shizuoka 4160909 (JP)
(74) Representative: HOFFMANN EITLE
(86) International application number: PCT/JP2004/006962
(87) International publication number: WO 2004/109191

(57) **Abstract**

There is provided an air conditioner capable of effectively reducing harmonics in a maximum current consumption time.

In order that a three phase AC power supply voltage is full-wave rectified by a main rectifier circuit 22, the output of which is converted to AC with variable frequency by an inverter 24 so as to drive an electric motor 25 with variable speed, the air conditioner comprises a transformer 10 for outputting a three phase AC voltage whose phase is advanced with respect to the three phase AC power supply voltage and a three phase AC voltage whose phase is delayed from the three phase AC power supply voltage, respectively, and two auxiliary rectifier circuits 11, 12 for full-wave rectifying the three phase AC voltages outputted from the transformer and for supplying the rectified voltages to an output side of the main rectifier circuit, the transformer 10 for use being configured so as to satisfy a transformer vector diagram of a hexagon in which the three phase AC phase voltage is expressed by a regular triangle, and which hexagon is formed by outside straight lines, each being drawn so as to be separated at a predetermined distance to the outside from and in parallel with a straight line drawn so as to pass two points obtained by dividing an arc, which is drawn around each vertex of the regular triangle so as to connect remaining two vertexes, into three equal parts, and by straight lines, each passing each vertex of the regular triangle.

## Description

### BACKGROUND OF THE INVENTION

### Field of the Invention

The present invention relates to an air conditioner for driving a compressor forming a refrigerating cycle, with variable speed according to an air conditioning load.

### Related Art

An air conditioner of this type is configured such that a three phase AC power supply voltage is rectified by a full-wave rectifier circuit, that an obtained DC is smoothed by a smoothing capacitor so as to be supplied to an inverter and that an output frequency of the inverter is changed in accordance with an air conditioning load so as to enable an AC of a variable voltage and variable frequency to be supplied to a compressor driving motor. In this case, rectifying elements in the three phase full-wave rectifier, each of which element becomes conductive in every 60 degrees, are sequentially switched to output a DC voltage. The DC voltage rectified by this method contains a voltage ripple having a large amplitude and a frequency of six times the power supply frequency, causing various troubles.

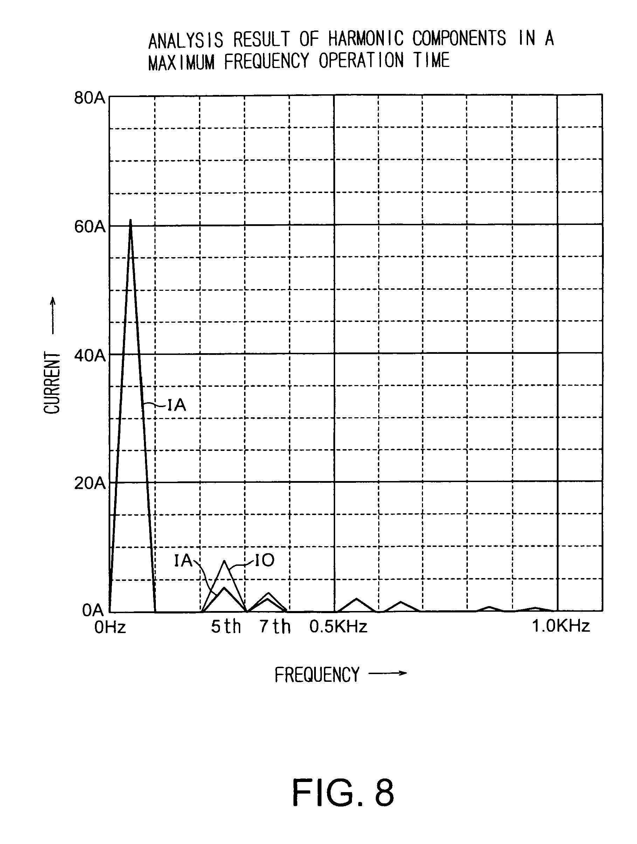

As a measure to this problem, there is proposed an eighteen pulses type rectifier comprising: a main three phase full-wave rectifier for converting a three phase AC to a DC; a transformer satisfying a transformer vector diagram represented by a hexagon in which three phase AC phase voltage is expressed by a regular triangle, and which hexagon is formed by straight lines, each passing two points obtained by dividing an arc, which is drawn around each vertex of the regular triangle so as to connect remaining two vertexes, into three equal parts, and by straight lines, each passing each vertex of the triangle and being in parallel with a side opposite to the vertex; and two auxiliary three phase full-wave rectifiers which rectifies two kinds of three-phase AC outputs from the transformer, respectively, and DC output lines of which rectifiers are connected in parallel with the main three phase full-wave rectifier (see, for example, Japanese Patent Laid-Open No. 2002-10646 (page 6, Figure 8)).

### SUMMARY OF THE INVENTION

However, the above described eighteen pulses type rectifier, when applied to an air conditioner driving a compressor with variable speed according to an air conditioning load, lowers the reducing effect of harmonics. That is, the output frequency of an inverter corresponds to a variable speed range of about 15 (rps) to 95 (rps). For this reason, in the eighteen pulses type rectifier with a theoretical transformer winding, when the inverter is in a low output and a small load state, the reducing effect of harmonics is large. In contrast, under a load condition of high rotation speed, current flowing into the transformer winding is increased to cause the output voltage to be decreased by the impedance of the winding, as a result of which, under the present situation, the reducing effect of harmonics is lowered as the output of the inverter is increased.

The present invention has been made in view of the above described circumstances. An object of the present invention is to provide an air conditioner capable of effectively reducing harmonics.

In order to achieve the above described object, according to the present invention, there is provided an air conditioner comprising: a main rectifier circuit for full-wave rectifying a three phase AC voltage received from a three phase AC power supply; an inverter for converting an output of the main rectifier circuit into AC with variable frequency and for driving a compressor forming a refrigerating cycle with variable speed; a transformer to which the three phase AC voltage of the three phase AC power supply is inputted, and which outputs a first three phase AC voltage whose phase is advanced by a predetermined angle with respect to the three phase AC voltage, and a second three phase AC voltage whose phase is delayed by a predetermined angle from the three phase AC voltage, respectively; and a first and second auxiliary rectifier circuits for full-wave rectifying the first and second three phase AC voltages outputted from the transformer and for supplying the rectified voltages to an output side of the main rectifier circuit,
the transformer for use being configured such that in a vector diagram expressing the three phase AC voltage by a regular triangle, a transformer vector diagram of a hexagon is formed of outside straight lines, each being drawn so as to be separated at a predetermined distance to the outside from and in parallel with a straight line passing two points obtained by dividing an arc, which is drawn around each vertex of the regular triangle so as to connect remaining two vertexes, into three equal parts, and of straight lines, each passing each vertex of the regular triangle, that in order to satisfy the transformer vector diagram, three sides of the hexagon, each passing each vertex of the regular triangle, are made to correspond to primary coil windings, and other three sides, each opposing to each of the three sides, are made to correspond to secondary coil windings, so as to make winding terminals successively connected in accordance with the transformer vector diagram, that intermediate taps provided at the primary coil windings corresponding to the vertexes of the regular triangle are connected to the three phase AC power supply, and that intermediate taps of one side, each of which corresponds to an intersection between a straight line drawn from each vertex of the regular triangle so as to pass one of the points, at which each of the arcs is almost equally divided into three parts, and each of the outside straight lines, are made to be output terminals of the first three phase AC voltage, and the intermediate taps of the other side are made to be output terminals of the second three phase AC voltage.

### BRIEF DESCRIPTION OF THE DRAWINGS

Figure 1 is a circuit diagram showing, partially in a block representation, a configuration of an embodiment of an air conditioner according to the present invention;
Figure 2 is a diagram showing a relationship between an air conditioning load of the air conditioner to which the present invention is applied and an inverter output frequency;
Figure 3 is a diagram showing a relationship between the inverter output frequency of the air conditioner and a power consumption;
Figure 4 is a transformer vector diagram constituting an eighteen pulses type rectifier in the embodiment according to the present invention;
Figure 5 is a figure showing a winding structure of a transformer satisfying the transformer vector diagram shown in Figure 4;
Figure 6 is a waveform chart showing a voltage ripple waveform in the present embodiment together with voltage ripple waveforms of other devices having different configurations;
Figure 7 is a current waveform chart for one cycle obtained by simulating a current waveform of the rectifier of the embodiment according to the present invention and a current waveform of a conventional rectifier, respectively;
Figure 8 is a distribution diagram of harmonic components obtained by the simulation in Figure 7;
Figure 9 is a waveform chart showing a power supply voltage and a transformer output voltage in the embodiment according to the present invention in comparison with a power supply voltage and a transformer output voltage in the case where the conventional rectifier is used; and
Figure 10 is a distribution diagram of harmonic components showing that the embodiment according to the present invention is also effective in a minimum frequency operation time.

### DETAILED DESCRIPTION OF THE INVENTION

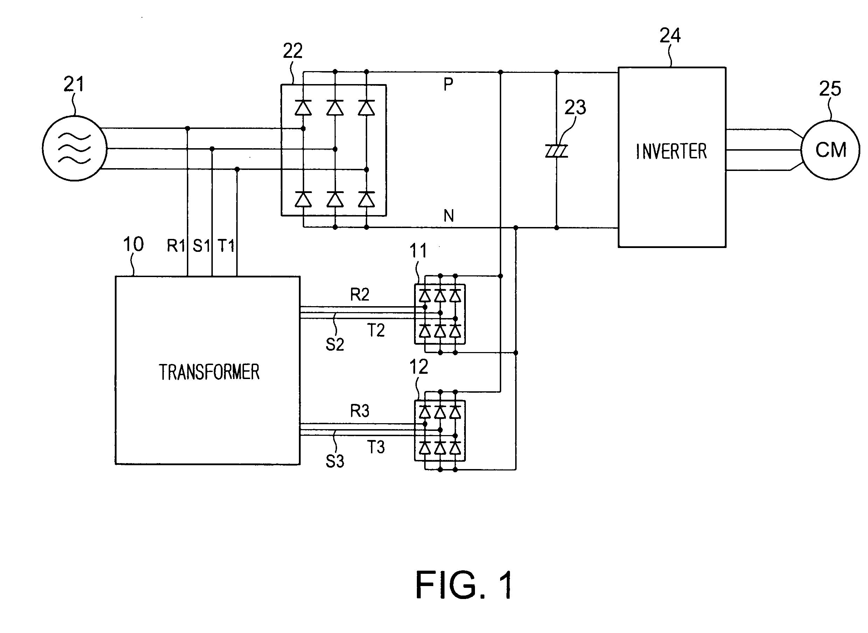

Hereafter, the present invention is described in more detail with reference to a preferred embodiment shown in the accompanying drawings. Figure 1 is a circuit diagram showing, partially in a block representation, a configuration of an embodiment of an air conditioner according to the present invention. In the figure, a main rectifier circuit 22 is connected to power supply lines R1, S1, T1 of a three phase AC power supply 21. The main rectifier circuit 22 is composed of six rectifying elements connected in three phase bridge so as to constitute a full-wave rectifier circuit. A smoothing capacitor 23 and an inverter 24 are connected to DC output terminals P, N of the main rectifier circuit 22. An electric motor 25 for driving a compressor constituting a refrigerating cycle is connected to the output side of the inverter 24. The primary side of a transformer 10 is connected to the power supply lines R1, S1, T1 of the three phase AC power supply 21 of 200 V. Input terminals of an auxiliary rectifier circuit 11 composed of a full-wave rectifier circuit are connected to three phase circuit output lines R2, S2, T2 of one of the secondary sides of the transformer 10. Input terminals of an auxiliary rectifier circuit 12 composed of a full-wave rectifier circuit are connected to three phase circuit output lines R3, S3, T3 of the other of the secondary sides of the transformer 10 (in the following description, reference characters R1 to R3, S1- to S3, T1 to T3 are used to denote terminals or voltages). Each output terminal of the auxiliary rectifier circuits is connected in parallel with the output terminal of the main rectifier circuit 22.

In this case, from the three phase output terminals R2, S2, T2 at one side of the transformer 10, a three phase AC voltage whose magnitude is equal to and whose phase is advanced by 40 degrees with respect to the three phase AC power supply 1, is outputted, and from the three phase output terminals R3, S3, T3 at the other side of the transformer 10, a three phase AC voltage whose magnitude is equal to and whose phase is delayed by 40 degrees from the three phase AC power supply 1 is outputted. This enables the auxiliary rectifier circuit 11 and the auxiliary rectifier circuit 12 to become conductive so as to compensate for lower values of the current ripple of DC outputted through the main rectifier circuit 2, as a result of which the voltage ripple becomes small and harmonics generated at the side of the three phase AC power supply 1 is also reduced.

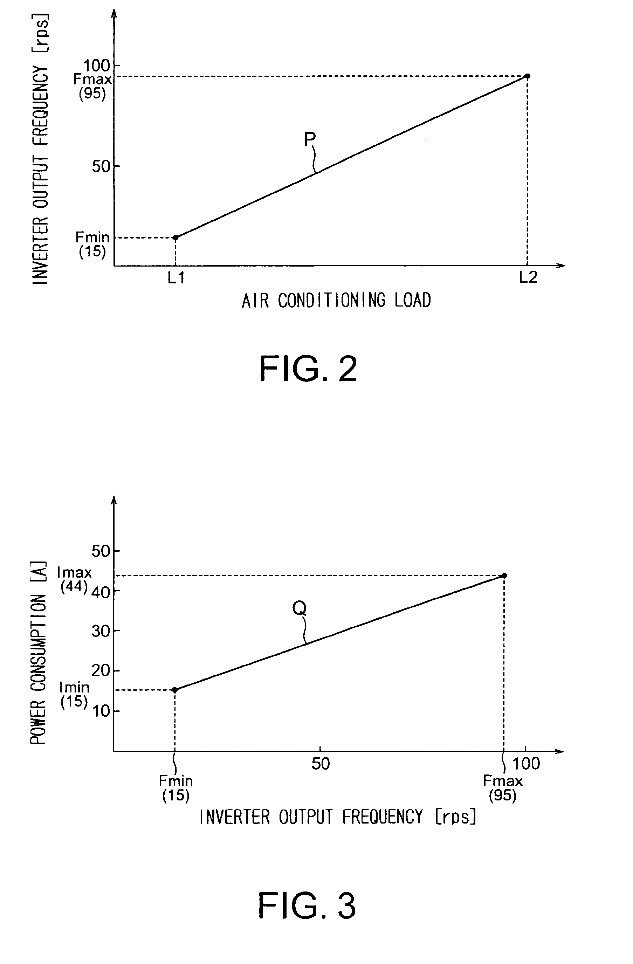

Figure 2 is a diagram showing a relationship between an air conditioning load and an inverter output frequency, and Figure 3 is a diagram showing a relationship between the inverter output frequency and a power consumption. As is apparent from these figures, when the air conditioning load is changed within the range of L1 to L2, the inverter output frequency is changed from 15 (rps) to 95 (rps). The current consumption is also changed within the range of 15 (A) to 44 (A). The magnitude (absolute value) of harmonics, which becomes large in proportion to the magnitude (current value from the power supply) of a fundamental wave, reaches a maximum in the vicinity of the maximum rotational speed of the inverter where the current consumption also becomes largest, posing a biggest problem.

The present embodiment, in which the winding structure of the transformer 10 is modified in order to effectively reduce the harmonics at the time of large current, is described in detail below in conjunction with the vector diagram.

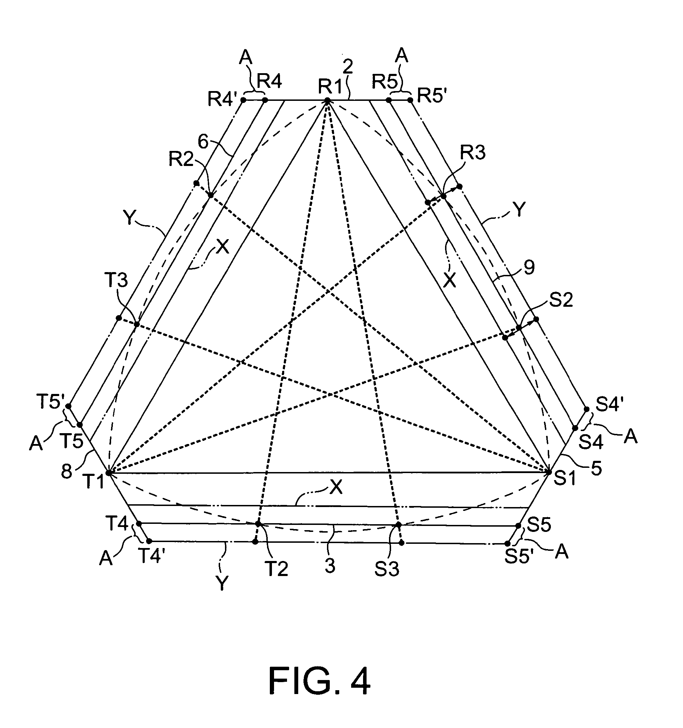

Figure 4 is a transformer vector diagram representing a winding structure of a transformer constituting the eighteen pulses type rectifier. In the figure, the three phase AC voltage of the power supply is expressed by a regular triangle R1, S1, T1. Two points obtained by dividing an arc, which is drawn around the vertex R1 of the regular triangle so as to connect remaining two vertexes S1, T1, into three equal parts, are defined as S3, T2, respectively. Two points obtained by dividing an arc, which is drawn around the vertex S1 of the regular triangle so as to connect remaining two vertexes T1, R1, into three equal parts, are also defined as T3, R2, respectively. Two points obtained by dividing an arc, which is drawn around the vertex T1 of the regular triangle so as to connect remaining two vertexes R1, S1, into three equal parts, are also defined as R3, S2, respectively.

Next, two points at which a straight line passing the vertex R1 of the regular triangle and in parallel with a side opposing to the vertex, intersects with a straight line passing the two points T3, R2 on the arc, and with a straight line passing the two points R3, S2 on the arc, are defined as R4, R5, respectively.

Two points at which a straight line passing the vertex S1 of the regular triangle and in parallel with a side opposing to the vertex, intersects with a straight line passing the two points R3, S2 on the arc, and with a straight line passing the two points S3, T2 on the arc, are also defined as S4, S5, respectively. Two points at which a straight line passing the vertex T1 of the regular triangle and in parallel with a side opposing to the vertex, intersects with a straight line passing the two points S3, T2 on the arc, and with a straight line passing the two points T3, R2 on the arc, are also defined as T4, T5, respectively.

Thus, a transformer vector diagram of a hexagon is formed by connecting the points R4, R5, S4, S5, T4, T5, R4. In the diagram, the line segment R4 to R5 corresponds to the R phase first coil 2, the line segment S5 to T4 to the R phase second coil 3, the line segment S4 to S5 to the S phase first coil 5, the line segment T5 to R4 to the S phase second coil 6, the line segment T4 to T5 to the T phase first coil 8, and the line segment R5 to S4 to the T phase second coil 9, respectively. In addition, the length of each line segment corresponds to the number of turns of each winding coils for the core of R, S, T phases.

The number of turns of the coils, which is determined in accordance with the transformer vectors of the hexagon R4 → R5 → S4 → S5 → T4 → T5 → R4 shown in Figure 4, enables, under no load condition, three phase AC voltages R2, S2, T2, R3, S3, T3 having an absolute value equal to that of three phase AC voltage R1, S1, T1 to be outputted.

However, an increase of the winding current in accordance with an increase of the inverter output frequency, causes the voltage to be decreased by the impedance, such as the winding resistance, so that the three phase AC voltages R2, S2, T2, R3, S3, T3 are decreased to values indicated by X inside the transformer vector R4 → R5 → S4 → S5 → T4 → T5 → R4.

In order to compensate for the voltage drop components, according to the present embodiment, the numbers of turns of the R phase first coil 2, the S phase first coil 5 and the T phase first coil 8 are added by about 50%, so as to enable the transformer vector R4' → R5' → S4' → S5' → T4' → T5' → R4' to be formed as indicated by A in the figure. The number of additional turns A of the coils is made to correspond to the vicinity of the maximum rotational speed of the compressor, e.g. the maximum current consumption (load current) 44 (A).

This causes the three phase AC voltages R2, S2, T2, R3, S3, T3 under low load condition to be increased to values indicated by the dashed and dotted line Y, but at the time of low frequency output of the inverter, the fundamental wave of current itself is small so that the absolute value of harmonic current itself is small, resulting in no problem.

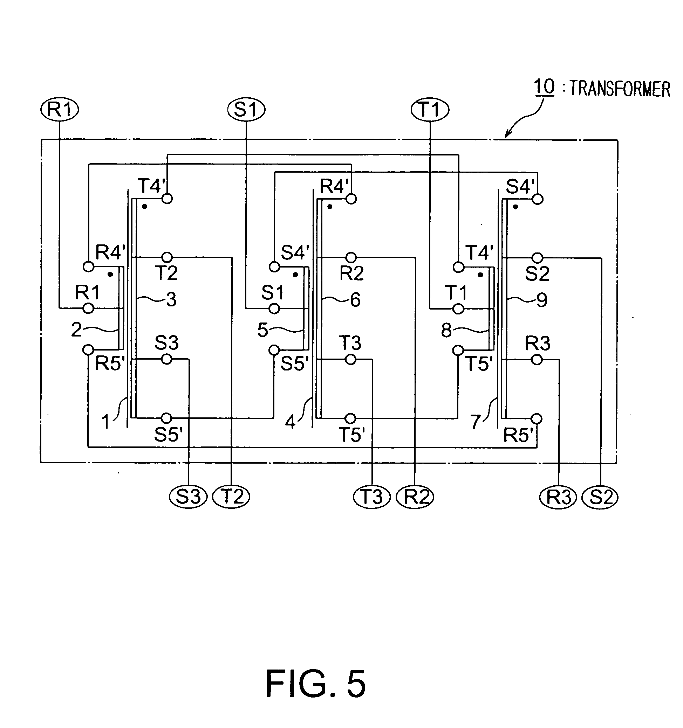

Figure 5 is a figure showing a winding structure of the transformer 10 satisfying the transformer vector diagram, in which reference numerals denoting equally divided points and intersections in Figure 4 are represented as winding terminals and intermediate taps. In this figure, the R phase core 1 is wound with the R phase first coil 2 and the R phase second coil 3, while the R phase first coil 2 is provided with an intermediate tap R1 and the R phase second coil 3 is provided with intermediate taps T2, S3.

Also, the S phase core 4 is wound with the S phase first coil 5 and the S phase second coil 6, while the S phase first coil 5 is provided with an intermediate tap S1 and the S phase second coil 6 is provided with intermediate taps R2, T3. Further, the T phase core 7 is wound with the T phase first coil 8 and the T phase second coil 9, while the T phase first coil 8 is provided with an intermediate tap T1 and the T phase second coil 9 is provided with intermediate taps S2, R3.

Also, one terminal R4' of the R phase first coil 2 is connected to one terminal R4' of the S phase second coil 6, one terminal S4' of the S phase first coil 5 to one terminal S4' of the T phase second coil 9, and one terminal T4' of the T phase first coil 8 to one terminal T4' of the R phase second coil 3, respectively, while the other terminal R5' of the R phase first coil 2 is connected to the other terminal R5' of the T phase second coil 9, the other terminal S5' of the S phase first coil 5 to the other terminal S5' of the R phase second coil 3, and the other terminal T5' of the T phase first coil 8 to the other terminal T5' of the S phase second coil 6, respectively. In addition, lead wires which are drawn out from the intermediate taps R1, S1, T1, are made to be input terminals R1, S1, T1 of the three phase AC, lead wires which are drawn out from the intermediate taps R2, S2, T2, are made to be output terminals R2, S2, T2 of the first three phase AC, and lead wires which are drawn out from the intermediate taps R3, S3, T3, are made to be output terminals R3, S3, T3 of the second three-phase AC.

Then, the first three phase AC output terminals R2, S2, T2 are connected to the auxiliary rectifier circuit 11, and the second three phase AC output terminals R3, S3, T3 are connected to another auxiliary rectifier circuit 12, while the output terminals of the auxiliary rectifier circuits, each of which terminals are connected in parallel with each other, are connected to the output terminals of the main rectifier circuit 22 for rectifying three phase AC to DC, thereby enabling harmonics in the vicinity of the maximum rotational speed of the compressor, i.e. at the time of the maximum current consumption to be reduced.

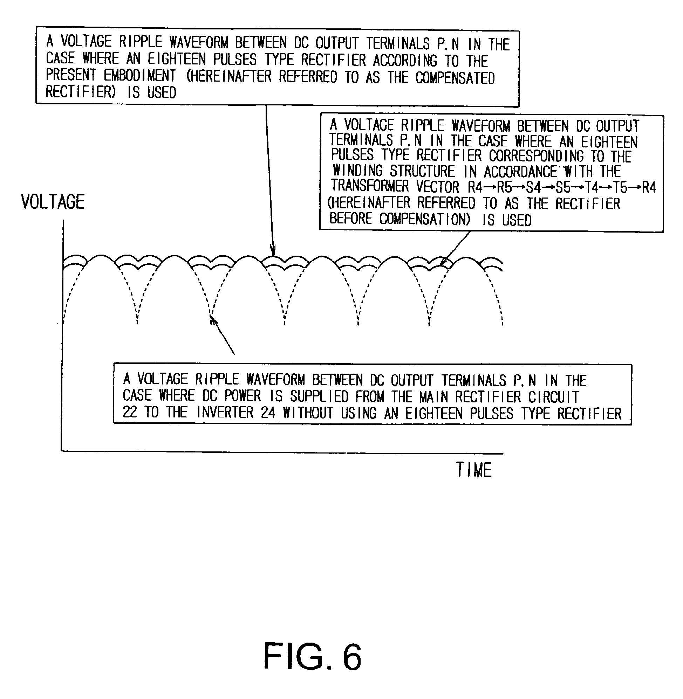

Figure 6 is a waveform chart showing, in a maximum frequency operation time, a voltage ripple waveform between DC output terminals P, N in the case where DC power is supplied from the main rectifier circuit 22 to the inverter 24 without using an eighteen pulses type rectifier, a voltage ripple waveform between DC output terminals P, N in the case where an eighteen pulses type rectifier corresponding to the winding structure in accordance with the transformer vector R4 → R5 → S4 → S5 → T4 → T5 → R4 (hereinafter referred to as the rectifier before compensation) is used, and a voltage ripple waveform between DC output terminals P, N in the case where an eighteen pulses type rectifier according to the present embodiment (hereinafter referred to as the compensated rectifier) is used. As is apparent from these waveform charts, in harmonics generated at the power supply side in a maximum current consumption time, the voltage ripple of the rectifier before compensation is reduced as compared with the case where the eighteen pulses type rectifier is not used, and the voltage ripple of the compensated rectifier is further reduced as compared with that of the rectifier before compensation.

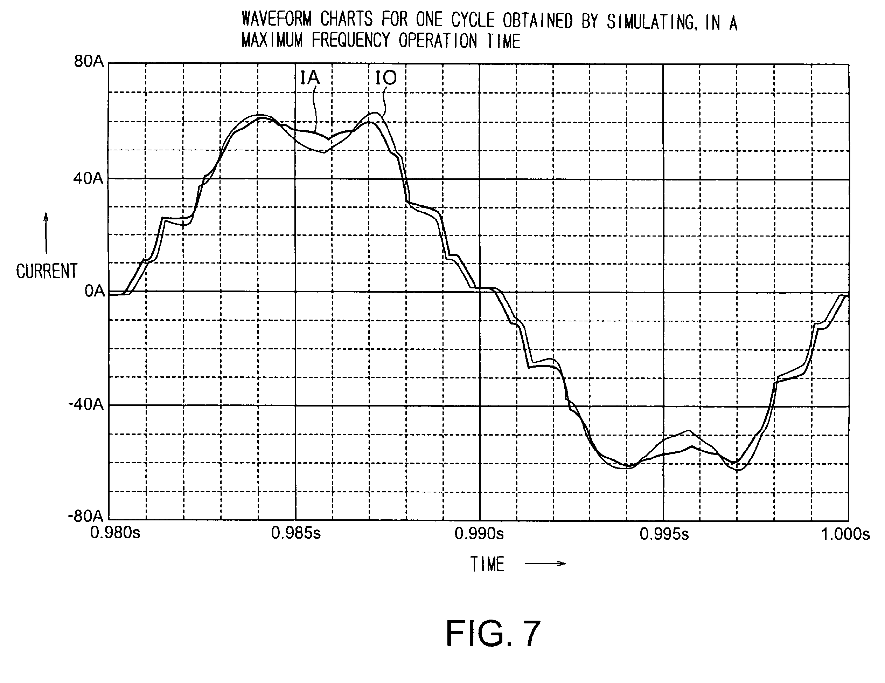

Figure 7 shows waveform charts for one cycle obtained by simulating, in a maximum frequency operation time (current consumption about 44A (effective value)) when the inverter of the air conditioner is operated at the maximum frequency of 95 (rps), a current waveform IO at the power supply side of the rectifier before compensation and a waveform of output current IA of the transformer constituting the compensated rectifier. It can be seen from this figure that the latter waveform is smoother as compared with the former.

Figure 8 shows an analysis result of harmonic components in a maximum frequency operation time. The analysis result shows that the fifth harmonic component, which is 12.9% (5.7 A (effective value)) in the rectifier before compensation as shown by the current waveform IO, can be reduced to 6.5% (2.8 A (effective value)) in the compensated rectifier as shown by the current waveform IA. As is apparent from Figure 8, the reducing effect is also revealed in the seventh harmonic.

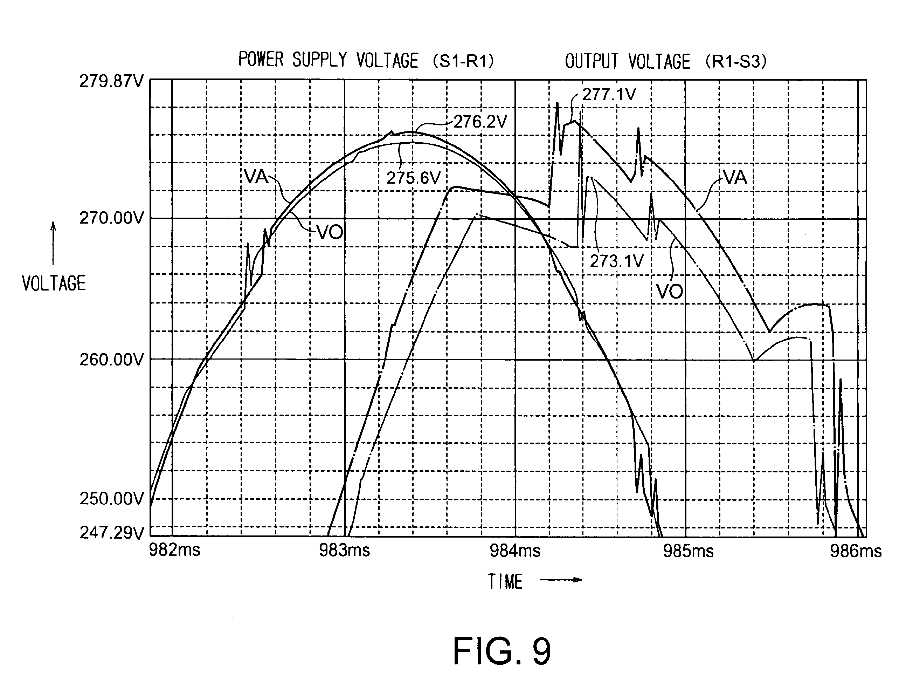

Figure 9 shows waveform charts obtained by simulating, in a maximum frequency operation time (current consumption about 44A (effective value)) when the inverter of the air conditioner is operated at the maximum frequency of 95 (rps), the relationships of an output voltage VO (voltage between voltage vectors R1, S3) of the transformer before winding compensation and an output voltage VA of the winding compensated transformer, to the power supply voltage VO (voltage between voltage vectors S1, R1) of the rectifier before compensation, and the power supply voltage VA of the compensated rectifier.

As is apparent from this figure, in the rectifier before compensation, the transformer output voltage is reduced by about 3 V to 273.1 V relative to the power supply voltage of 275.6 V (peak value), while in the compensated rectifier, the transformer output voltage is increased only by about 1 V to 277.1 V relative to the power supply voltage of 276.2 V

Consequently, in the compensated rectifier, the difference between the power supply voltage and the output voltage of the transformer can be made small, to the extent of which the current flowing from the transformer is increased to enhance the reducing effect of harmonic components. As shown in Figure 7, this is also a factor for enabling the current waveform IA of the compensated rectifier to be made smoother as compared with the current waveform IO of the rectifier before compensation.

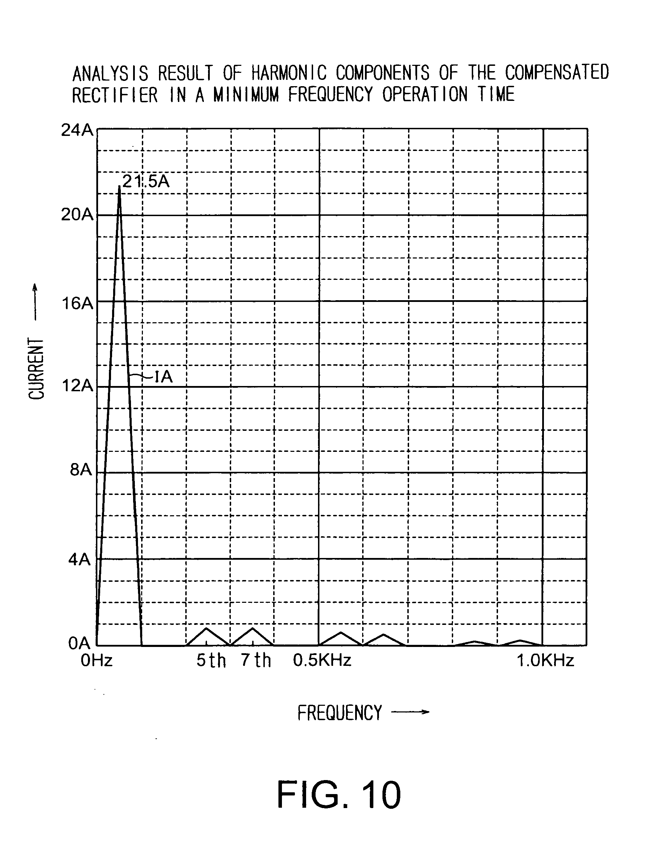

Figure 10 shows an analysis result of harmonic components of the compensated rectifier in a minimum frequency operation time (current consumption about 15 A) when the output frequency of the inverter of the air conditioner is 15 (rps), from which result it can be seen that the reducing effect is also revealed in the fifth harmonic as shown in Figure 8.

In this way, according to the present embodiment, the harmonics which are generated at a time of large current consumption and which causes a problem in an actual use can be effectively reduced.

In the transformer vector diagram in Figure 4, in order to make both ends of the R phase first coil 2, the S phase first coil 5 and the T phase first coil 8 completely correspond to a maximum frequency operation time in association with the additional turns A provided for the both ends of the coils, the total number of turns of the R phase second coil 3, the S phase second coil 6 and the T phase second coil 9, and the position of the intermediate taps need to be adjusted, but the operation for making the settings of the number of turns and of turn ratios of the windings correspond with each other is extremely complicated. Accordingly, the R phase first coil 2, the S phase first coil 5 and the T phase first coil 8, which are modified most easily, are merely provided with the additional windings so as to obtain the above described effect, and such provision of the additional windings also has an advantage that it can be put into practical use by a simple method. In this case, the points corresponding to the three equally divided points R3, S2, S3, T2, T3, R2 of the arcs are made to approximately correspond to intersections between straight lines passing the three equally divided points and the outside lines.

Although the present invention is described in connection with an eighteen pulses type rectifier for driving a compressor of an air conditioner, the present invention is not restricted to that, but it can be applied to the other electrical apparatus, such as an elevator, which performs variable speed control of an electric motor via an inverter.

### INDUSTRIAL APPLICABILITY

As is apparent from the above description, according to the present invention, it is possible to obtain an air conditioner capable of effectively reducing harmonics in an actual use area.

## Claims

1. An air conditioner comprising: a main rectifier circuit for full-wave rectifying a three phase AC voltage received from a three phase AC power supply; an inverter for converting an output of said main rectifier circuit into AC with variable frequency and for driving a compressor forming a refrigerating cycle with variable speed; a transformer to which the three phase AC voltage of said three phase AC power supply is inputted, and which outputs a first three phase AC voltage whose phase is advanced by a predetermined angle with respect to the three phase AC voltage and a second three phase AC voltage whose phase is delayed by a predetermined angle from the three phase AC voltage, respectively; and a first and second auxiliary rectifier circuits for full-wave rectifying the first and second three phase AC voltages outputted from said transformer, and for supplying the rectified voltages to an output side of said main rectifier circuit,
said transformer being configured such that in a vector diagram expressing three phase AC voltage by a regular triangle, a transformer vector diagram of a hexagon is formed of outside straight lines, each being drawn so as to be separated at a predetermined distance to the outside from and in parallel with each straight line drawn so as to pass two points obtained by dividing an arc, which is drawn around each vertex of said regular triangle so as to connect remaining two vertexes, into three equal parts, and of straight lines, each passing each vertex of said regular triangle, that in order to satisfy the transformer vector diagram, three sides of said hexagon, each passing each vertex of said regular triangle, are made to correspond to primary coil windings, and other three sides, each opposing to each of the three sides, are made to correspond to secondary coil windings, so as to make each terminal of the windings successively connected in accordance with the transformer vector diagram, that intermediate taps provided for the primary coil windings which correspond to the vertexes of said regular triangle are connected to said three phase AC power supply, and that the intermediate taps of one side, each of which approximately correspond to an intersection between a straight line drawn from each vertex of said regular triangle so as to pass one of the points, at which each of said arcs is almost equally divided into three parts, and each of said outside straight lines, are made to be output terminals of said first three phase AC voltage, and the intermediate taps of the other side are made to be output terminals of said second three phase AC voltage.

2. The air conditioner according to claim 1, wherein said predetermined distance is set so as to make said first and second three phase AC voltages approximately equal to the three phase AC voltage received from the three phase AC power supply in the vicinity of a maximum rotational speed of the compressor.
